# DEMANDE DE BREVET EUROPEEN

(11) **EP 0 633 057 A1**
(43) Date de publication de la demande: **11.01.1995**
(21) Numéro de dépôt: 94401402.6
(22) Date de dépôt: 22.06.1994
(51) Int. Cl.: B01F 17/00, A01N 25/04, A01N 25/30

(54) **Formulations concentrées fluides de dérivés de tristyrylphénols polyalkoxylés phosphatés utilisables notamment en agrochimie**

(30) Priorité: 07.07.1993 FR 9308324
(71) Demandeur: RHONE-POULENC GERONAZZO S.p.A., 20021 Ospiate di Bollate Milano (IT)
(72) Inventeur: Bramati, Valério, I-20020 Arese (IT); Marchetto, Antonio, I-21047 Saronno (IT)
(74) Mandataire: Fabre, Madeleine-France

(57) **Abrégé**

Composition fluide stable dans le temps et en températures, constituée d'au moins un dérivé de tristyrylphénol polyalkoxylé phosphaté et d'un diluant, caractérisée en ce que ledit diluant est de la glycérine et en ce que la concentration de tristyrylphénol polyalkoxylé phosphaté dans ledit diluant est d'au moins 40% en poids.

Elle peut être utilisée pour la stabilisation de matières actives agrochimiques dans des formulations de type suspensions concentrées, émulsions, suspo-émulsions.

## Description

La présente invention a pour objet la mise au point de formulations fluides et stabilisées dans le temps de dérivés de tristyrylphénol polyalkoxylé phosphatés.

Actuellement, les formulations commerciales de sels de tristyrylphénol polyéthoxylés phosphatés disponibles mettent en oeuvre, à titre de support correspondant, principalement du monopropylène glycol. Pour des raisons de stabilité physico-chimiques, ces formulations liquides ne peuvent malheureusement dépasser des concentrations d'environ 40% en poids de dérivés tristyrylphénol. A des concentrations supérieures, on est confronté à un phénomène de démixtion préjudiciable à l'homogénéité de la formulation et qui génère des difficultés importantes au niveau de son emploi ultérieur.

Outre les inconvénients précités, cette limitation au niveau de la concentration représente bien entendu un handicap important sur le plan de la logistique et dont il serait souhaitable au niveau industriel de s'affranchir.

La présente invention a précisément pour objet de proposer une solution au problème précité.

Celle-ci vise une composition fluide et stabilisée à base d'au moins un dérivé de tristyrylphénol polyalkoxylé phosphaté et d'un diluant, caractérisée en ce que ledit diluant est de la glycérine, et en ce que la concentration de tristyrylphénol polyalkoxylé phosphaté dans ledit diluant est d'au moins environ 40% en poids,de préférence de l'ordre de 50 à 80 % en poids, et tout particulièrement de l'ordre de 70% en poids.

De manière inattendue, la glycérine s'avère un substitut avantageux du monopropylène glycol.

Comme lui, elle se révèle un bon solvant des dérivés de tristyrylphénol polyalkoxylés phosphatés et de leur sels et avantageusement, comparativement au monopropylène glycol, condu à des formulations correspondantes nettement plus concentrées et stables.

Alors que le monopropylèneglycol ne permet pas d'atteindre des concentrations supérieures à 40%, la glycérine conduit efficacement à des formulations enrichies jusqu'à 80% en produits actifs.

Bien entendu, ces formulations enrichies conservent en outre les qualités requises à savoir une bonne fluidité et une stabilité dans le temps et en températures.

Par dérivés tristyrylphénols polyalkoxylés phosphatés, on entend couvrir selon l'invention des dérivés dans lesquels les motifs alcoxyles sont de préférence des motifs oxyéthylène et/ou oxypropylène. Le nombre de ces motifs varie généralement entre 4 et 100 selon la balance hydrophilie/lipophilie désirée. De préférence, le nombre de ces motifs varie entre 5 et 40. Il peut notamment s'agir d'un dérivé de tristyrylphénol éthoxylé/propoxylé possédant des motifs oxyéthylénes (OE) et/ou oxypropylènes (OP) avec un rapport OE/OP pouvant varier entre 100/0 et 50/50.

A titre d'exemples particuliers de ce type de tensioactifs on peut notamment citer: - les tristyrylphénol éthoxylés phosphatés à 16, 20, 25, 40 motifs OE et ceux à 25 motifs OE + OP.

Ces composés sont de préférence sous la forme de leurs sels et plus particulièrement de leurs sels alcalins et alcalino-terreux comme le K, Na, NH₄, Ca, Mg, Zn ...

La glycérine peut être mise en oeuvre à titre de solvant unique ou en mélange avec d'autres solvants usuels de ce type de tensioactifs.
Bien entendu, il est clair que dans cette seconde éventualité la proportion en glycérine doit demeurer telle que l'on obtienne des formulations correspondantes fluides et stabilisées dans le temps et en températures. Cet ajustement ne constitue qu'une mise au point de routine pour tout homme de l'art.
Comme solvant, susceptible d'être introduit dans la composition revendiquée en mélange avec la glycérine, on peut notamment citer : l'eau, le monopropylèneglycol, le monoéthylèneglycol, les glycols comme le diéthylèneglycol, les alcools comme l'isobutanol et le cyclohexanol ou encore la N-méthylpyrrolidine. Il est entendu que cette liste de solvants susceptibles d'être associés à la glycérine n'est aucunement limitative et qu'il est à la portée de l'homme de l'art de la compléter.

A titre de formulation préférée selon l'invention, on citera tout particulièrement une composition à 70% en poids de sel de potassium du tristyrylphénol polyéthoxylé à 16 motifs OE phosphaté en solution dans de la glycérine.

Bien entendu, les compositions selon l'invention peuvent incorporer en outre d'autres additifs usuels de type antigel, colorants, antimousses, agents protecteurs vis à vis de l'oxydation, des rayons U.V ou de variations de pH.

Les compositions selon l'invention s'avèrent tout particulièrement utiles pour stabiliser des matières actives dans des formulations de type dispersions, suspensions, suspoémulsions...

Ces matières actives sont notamment des matières actives agrochimiques telles que par exemple des fongicides, pesticides, insecticides, germicides, nématicides, molluscicides, rodenticides, attractifs, répulsifs, herbicides; activateurs de croissance.

Les exemples présentés ci-après, à titre non limitatif de la présente invention, permettront d'en mettre en évidence d'autres avantages.

### EXEMPLE 1

Les différentes compositions testées ci-après ont été préparées par ajout de la quantité requise en sel de potassium du tristyrylphénol éthoxylé à 16 motifs OE phosphaté dans de la glycérine.

A titre comparatif, les résultats de stabilité et de viscosité présentés ci-après rendent également compte du comportement de deux formulations témoins de sel de potassium du tristyrylphénol éthoxylé à 16 motifs OE phosphaté, en solutions respectives à 40% et 60% en poids dans du monopropylèneglycol. Dans le cas de la solution témoin à 40% en poids, il s'agit plus précisément du composé commercialisé sous la dénomination SOPROPHOR FLK® par RHONE POULENC GERONAZZO.

La fluidité de chacune des formulations a été appréciée par mesure de sa viscosité à deux températures différentes les mesures de viscosité ont été réalisées à l'aide d'un rhéomètre BROOKFIELD L.V.T. à 60 tours/minute.

Quant à l'homogénéité desdites solutions, elle a été appréciée visuellement pour deux températures distinctes ainsi qu'au terme d'un cycle de températures. Ce cycle de température consiste à imposer à la solution testée un basculement de température de -5°C à 45°C avec une périodicité de 24 heures et ceci pendant 1 mois. Le chauffage à 45°c est réalisé à l'aide d'un autoclave.

Le tableau présenté ci-après rend compte des résultats observés après deux mois de stockage.

**TABLEAU**

| | VISCOSITE | | STABILITE A LA TEMPERATURE | | |
|---|---|---|---|---|---|
| | (MPa.s) à | | T.A | 45°C | cycle |
| | 20°C | 50°C | | | |
| Témoin à 40% dans du MPG | 368 | 60 | bonne | bonne | bonne |
| Témoin à 60% dans du MPG | - | - | démixtion | démixtion | démixtion |
| composition selon l'invention à 70% | 12307 | 1325 | bonne | bonne | bonne |
| composition selon l'invention à 80% | 11220 | 1366 | bonne | bonne | bonne |

Ces résultats confirment l'obtention de compositions homogènes et fluides à fortes concentrations en sel de tristyrylphénol polyéthoxylé phosphaté et ceci pour une plage importante en températures.

On note que le témoin à 60% dans du monopropylène glycol conduit à une démixtion dès la température ambiante.

## Revendications

**1)** Composition fluide stable dans le temps et en températures, constituée d'au moins un dérivé de tristyrylphénol polyalkoxylé phosphaté et d'un diluant, caractérisée en ce que ledit diluant est de la glycérine et en ce que la concentration de tristyrylphénol polyalkoxylé phosphaté dans ledit diluant est d'au moins 40% en poids.

**2)** Composition selon la revendication 1), caractérisée en ce que la concentration de dérivé de tristyrylphénol polyalkoxylé phosphaté dans ledit diluant est de 50 à 80% en poids et de préférence d'environ 70% en poids.

**3)** Composition selon la revendication 1) ou 2), caractérisée en ce que le dérivé de tristyrylphénol polyalkoxylé phosphaté est choisi parmi les dérivés dans lesquels les motifs alcoxyles sont des motifs oxyéthylènes et/ou oxypropylènes, avec un nombre de motifs compris entre 4 et 100.

**4)** Composition selon la revendication 3), caractérisée en ce que le le nombre de motifs oxyéthylenes et/ou oxypropylènes varie entre 5 et 40.

**5)** Composition selon l'une quelconque des revendications précédentes, caractérisée en ce que le dérivé de tristyrylphénol polyalkoxylé phosphaté est choisi parmi les dérivés dans lesquels les motifs alcoxyles sont des motifs oxyéthylènes et/ou oxypropylènes selon un rapport nombre de motifs oxyéthylènes / nombre de motifs oxypropylènes variant de 100/0 à 50/50.

**6)** Composition selon l'une quelconque des revendications précédentes, carctérisée en ce que le dérivé de tristyrylphénol polyalkoxylé phosphaté est un sel de potassium de tristyrylphénol éthoxylé à 16 motifs oxyéthylénés phosphaté.

**7)** Composition selon l'une quelconque des revendications précédentes, caractérisée en ce qu'elle contient en outre des colorants, antimousses, agents protecteurs vis-à -vis de l'oxydation, des rayons U-V ou de variations de pH.

**8)** Utilisation d'une composition faisant l'objet de l'une quelconque des revendications précédentes, à la stabilisation de matières actives dans des formulations de type suspensions concentrées, émulsions, suspo-émulsions.

**9)** Utilisation selon la revendication 8), caractérisée en ce que les matières actives sont des substances agrochimiques de type fongicides, pesticides, insecticides, germicides, molluscicides, rodenticides, attractifs, répulsifs, herbicides, activateurs de croissance.
